# EUROPÄISCHE PATENTSCHRIFT

(11) **EP 1 354 163 B1**
(45) Veröffentlichungstag und Bekanntmachung des Hinweises auf die Patenterteilung: **06.07.2005**
(21) Anmeldenummer: 02712846.1
(22) Anmeldetag: 24.01.2002
(51) Int. Cl.: F16L 37/092

(54) **VORRICHTUNG ZUM LÖSBAREN VERBINDEN MIT EINEM ENDE EINER RÖHRENARTIGEN LEITUNG, INSBESONDERE SCHLAUCH-SCHNELLVERBINDER**
DEVICE FOR DETACHABLE CONNECTION TO AN END OF A TUBE-LIKE LINE, IN PARTICULAR A RAPID HOSE-CONNECTOR
DISPOSITIF DE RACCORDEMENT DESSERRABLE A UNE EXTREMITE D'UN CONDUITE TUBULAIRE, EN PARTICULIER RACCORD RAPIDE

(30) Priorität: 25.01.2001 DE 10103173
(43) Veröffentlichungstag der Anmeldung: 22.10.2003
(73) Patentinhaber: Biermann, Martin, 71334 Waiblingen (DE)
(72) Erfinder: Biermann, Martin, 71334 Waiblingen (DE)
(74) Vertreter: Crazzolara, Helmut, Dr.
(86) Internationale Anmeldenummer: PCT/EP2002/000711
(87) Internationale Veröffentlichungsnummer: WO 2002/059521

(56) Entgegenhaltungen:
- EP-A- 0 877 192
- DE-A- 3 541 675
- GB-A- 2 174 468
- US-A- 3 884 513

## Beschreibung

Die Erfindung betrifft eine Vorrichtung zum lösbaren Verbinden mit einem Ende einer röhrenartigen Leitung, insbesondere einen Schlauch-Schnellverbinder, mit einem Anschlussstück, in das ein Ende der röhrenartigen Leitung einführbar ist, einem Dichtelement und einem mindestens eine Klemmbacke aufweisenden Klemmelement, wobei die Klemmbacke in einer Ausgangsposition in Anlage an der röhrenartigen Leitung ist und in Bezug auf eine Längsachse der Vorrichtung radial auslenkbar ist.

Aus der DE 35 41 675 A1 und DE 39 02 642 A1 sind gattungsgemäße Vorrichtungen bekannt, wie sie beispielsweise für pneumatische Steuerleitungen in Produktionsanlagen der Kraftfahrzeugindustrie oder der Lebensmittelindustrie eingesetzt werden oder in Verbindungsleitungen beispielsweise für deionisiertes Wasser. Dabei werden durch moderne Anlagenkonzepte immer höhere Anforderungen an die Dichtheit, Zuverlässigkeit und einfache Bedienbarkeit der Verbindungsvorrichtungen gestellt. Insbesondere bei der Verwendung von Schläuchen kann es beispielsweise durch schräges Abschneiden des Schlauches, durch Verformen des Schlauchendes infolge Quetschung, und/oder durch Schrägzugbelasten des montierten Schlauchendes zu Undichtigkeiten kommen.

Die EP 0 628 760 B1 zeigt eine Vorrichtung, bei der das Dichtelement in dem Löseelement gekammert ist und spätestens beim Einführen der röhrenartigen Leitung derart verformt wird, dass es in Anlage an die Wände seiner Kammer kommt. Dadurch ergibt sich ein erhöhter Kraftaufwand bei der Montage. Außerdem erfolgt das Lösen durch unmittelbaren Eingriff des Löseelements, insbesondere von dessen Führungsteil, in die Klemmbacke.

Die GB 2,174,468 A zeigt eine Vorrichtung mit einer Stützhülse, über welche die röhrenartige Leitung aufschiebbar ist.

Die US 3,884,513 zeigt eine Vorrichtung nach dem Oberbegriff des Anspruchs 1. Das Klemmelement ist einstückig mit dem Anschlußstück ausgebildet. Die zugehörigen Klemmbacken weisen eine sich in Richtung ihres freien axialen Endes aufweisende Klemmfläche auf, die mit einer zugehörigen Klemmfläche des Löseelements zusammenwirkt.
Die Innenkanten der Klemmbacken sind in einer Ausgangsstellung der Vorrichtung von der röhrenartigen Leitung beabstandet.

Der Erfindung liegt das Problem zugrunde, eine gattungsgemäße Vorrichtung bereitzustellen, welche die Nachteile des Standes der Technik überwindet, insbesondere auch bei schräg abgeschnittenen oder verformten Schlauchenden sowie bei Schrägzugbelastung des montierten Schlauchendes dauerhaft dicht ist. Die mit der Herstellung der Verbindungsvorrichtung und deren Montage und Wartung verbundenen Kosten sollen dabei möglichst gering sein.

Das Problem ist durch eine Vorrichtung gemäß Anspruch 1 gelöst. Besondere Ausführungsarten der Erfindung sind in den Unteransprüchen bestimmt.

Dadurch, dass in Einführrichtung der röhrenartigen Leitung das Dichtelement vor der Klemmbacke angeordnet ist und dass das Dichtelement in der eingeführten Position der röhrenartigen Leitung in Anlage an einer Außenumfangsfläche der röhrenartigen Leitung ist, die beim Einführen der röhrenartigen Leitung kontaktfrei zu der Klemmbacke bleibt, ist eine dauerhaft hohe Dichtheit der Verbindungsvorrichtung gewährleistet. Insbesondere sind Undichtigkeiten durch Verletzungen der Außenumfangsfläche der röhrenartigen Leitung durch die Klemmbacken ausgeschlossen. Zwar kommt nach wie vor ein Ende der röhrenartigen Leitung beim Einführen in das Anschlussstück in Kontakt mit den verhältnismäßig scharfkantigen Klemmbacken, aber durch die erfindungsgemäße Anordnung des Dichtelements ist dieses stets in Anlage an einen Abschnitt der röhrenartigen Leitung, die beim Einführen kontaktfrei zu der Klemmbacke bleibt. Dies gilt insbesondere auch bei mehrmaligem Ein- und Ausführen der röhrenartigen Leitung in bzw. aus der Vorrichtung.

Darüber hinaus ist durch die erfindungsgemäße Vorrichtung das Dichtelement weiter vom Ende der röhrenartigen Leitung entfernt, insbesondere weil zwischen Dichtelement und Leitungsende das Klemmelement angeordnet ist, so dass beispielsweise ein schräg abgeschnittenes und/oder verformtes Schlauchende keinen negativen Einfluß auf die Dichtheit hat. Für Anwendungsfälle, in denen eine Abdichtung zwischen der Leitung und dem Klemmelement erforderlich ist, kann zusätzlich zum erfindungsgemäßen Dichtelement ein weiteres Dichtelement entsprechend dem Stand der Technik zwischen Klemmelement und Leitungsende in bekannter Weise angeordnet sein.

Die röhrenartige Leitung kann aus einem Schlauch aus Kunststoff bestehen, beispielsweise aus Polyethylen (PE), Polyurethan (PU), Polyamid (PA) oder Polytetrafluorethylen (PTFE). Durch die radiale Auslenkung der Klemmbacke krallt sich diese in den Schlauch und verhindert dadurch ein Herausdrücken des Schlauches aus der Vorrichtung aufgrund des in dem Schlauch beförderten und unter Druck stehenden Mediums. Vorzugsweise weist das Klemmelement mehrere und insbesondere umfänglich gleich verteilte Klemmbacken auf, die jeweils eine durch einen spitzen Winkel einschließende Backenflächen gebildete Klemmkante oder Klemmspitze aufweisen. Die Klemmbacken können vorzugsweise einstückig durch axiales Schlitzen einer Klemmhülse ausgebildet sein und mittels eines einstückig mit den Klemmbacken ausgebildeten ringförmigen Verbindungselements miteinander verbunden sein.

Vorzugsweise ist das Klemmelement in dem Anschlussstück axial beweglich und die Klemmbacke infolge der axialen Bewegung des Klemmelements radial auslenkbar. Beispielsweise bildet jede Klemmbacke eine gegenüber der Längsachse der Vorrichtung schräg verlaufende Fläche aus, die bei einer Axialbewegung des Klemmelements mit einer entsprechenden Fläche oder Kante des Anschlussstücks zusammenwirkt und die radiale Auslenkung der Klemmbacke bewirkt. Das Klemmelement ist vorzugsweise aus einem entsprechend federelastischen Material hergestellt, beispielsweise aus einem entsprechend geeigneten Spezialstahl oder aus einem demgegenüber spanend einfacher zu bearbeitenden Werkstoff.

Die Vorrichtung weist ein gegenüber dem Anschlussstück axial verschiebbares Löseelement auf, und das Dichtelement ist zwischen dem Löseelement und der Klemmbacke angeordnet. Das Dichtelement ist dabei sowohl in Anlage an der Klemmbacke als auch in Anlage an dem Löseelement, und zwar vorzugsweise sowohl in einer Ausgangsposition der Vorrichtung, in der die Klemmbacke den Weg zum Einführen der röhrenartigen Leitung in das Anschlussstück freigibt, als auch in einer Endposition, in der die Klemmbacke die eingeführte röhrenartige Leitung in der Vorrichtung klemmt. Das Dichtelement kann daher auch der Betätigung der Klemmbacke dienen. Vorzugsweise weist die Klemmbacke hierzu an ihrem dem Dichtelement zugewandten Ende eine sich zum Dichtelement hin radial aufweitende Anlagefläche auf.

Das Löseelement kann an seinem dem Dichtelement zugewandten Ende eine Anlagefläche aufweisen, die mit der Längsachse der Vorrichtung im Wesentlichen einen rechten Winkel einschließt. Vorzugsweise weist das Löseelement hierzu ein Ringelement auf, das auf seiner der röhrenartigen Leitung zugewandten Innenfläche mindestens abschnittsweise zylindrisch ausgebildet ist und dadurch eine Führungsfläche für die röhrenartige Leitung bildet. Die Länge des zylindrischen Abschnitts des Ringelements beträgt dabei vorzugsweise mindestens das Doppelte, insbesondere etwa das Vierfache der Wandstärke der röhrenartigen Leitung. Dadurch ergibt sich eine gute Führung der röhrenartigen Leitung beim Einführen in die Vorrichtung, wodurch das Beschädigungsrisiko des endseitigen Abschnitts der Leitung weiter reduziert ist.

In einer besonderen Ausführungsart weist das Löseelement ein Hülsenelement auf, das unverlierbar an der Vorrichtung angeordnet ist, insbesondere an einem axialen Ende in eine von dem Anschlussstück ausgebildete Nut eingebördelt ist. Das Hülsenelement weist mindestens abschnittsweise eine zylindrische Innenfläche auf, die mit einer entsprechenden zylindrischen Führungsfläche des Anschlussstücks zusammenwirkt, so dass das Löseelement gegenüber dem Anschlussstück axial geführt manuell verschiebbar ist. Vorzugsweise ist das Löseelement einstückig ausgebildet. Entsprechend dem jeweiligen Anwendungsfall können das Hülsenelement und das Ringelement auch als separate Teile hergestellt werden und können vor oder nach der Montage miteinander lösbar oder unlösbar verbunden werden.

Üblicherweise ist das Löseelement an dem, dem Anschlussstück gegenüberliegenden axialen Ende der Vorrichtung angeordnet. In einer besonderen Ausführungsart der Erfindung ist das Löseelement in mindestens einer axialen Endposition mit dem Anschlussstück lösbar verrastbar. Dieskann beispielsweise durch eine in dem Anschlussstück federvorgespannt geführte und radial verschiebbare Kugel realisiert sein, die in der jeweiligen Endposition in eine Ausnehmung in dem Löseelement, insbesondere dem Hülsenelement, eingreift. Selbstverständlich kann in entsprechender Weise das Rastelement auch in dem Löseelement angeordnet bzw. geführt sein und in eine Öffnung des Anschlussstücks eingreifen.

In einer besonderen Ausführungsart der Erfindung ist mindestens eine axiale Endposition des Löseelements visuell und/oder taktil signalisierbar. Beispielsweise kann in der Endposition ein auf dem Anschlussstück angeordneter Farbring sichtbar werden, der andernfalls von dem Löseelement und insbesondere dem Hülsenelement verdeckt ist. Weiterhin kann beispielsweise im Falle einer Verrastung das verrastende Element in der jeweiligen Endposition tastbar sein. Letzteres ist insbesondere im Falle beengter räumlicher Verhältnisse vorteilhaft, die unter Umständen eine visuelle Kontrolle der Endposition unmöglich machen oder jedenfalls erschweren.

Weitere Vorteile, Merkmale und Einzelheiten der Erfindung ergeben sich aus den Unteransprüchen sowie der nachfolgenden Beschreibung, in der unter Bezugnahme auf die Zeichnungen zwei Ausführungsbeispiele im Einzelnen beschrieben sind.
- Fig. 1: zeigt eine erfindungsgemäße Vorrichtung im Längsschnitt,
- Fig. 2: zeigt ein zweites Ausführungsbeispiel der Erfindung, und
- Fig. 3: zeigt eine bevorzugte Ausführung der Klemmbacken im Querschnitt.

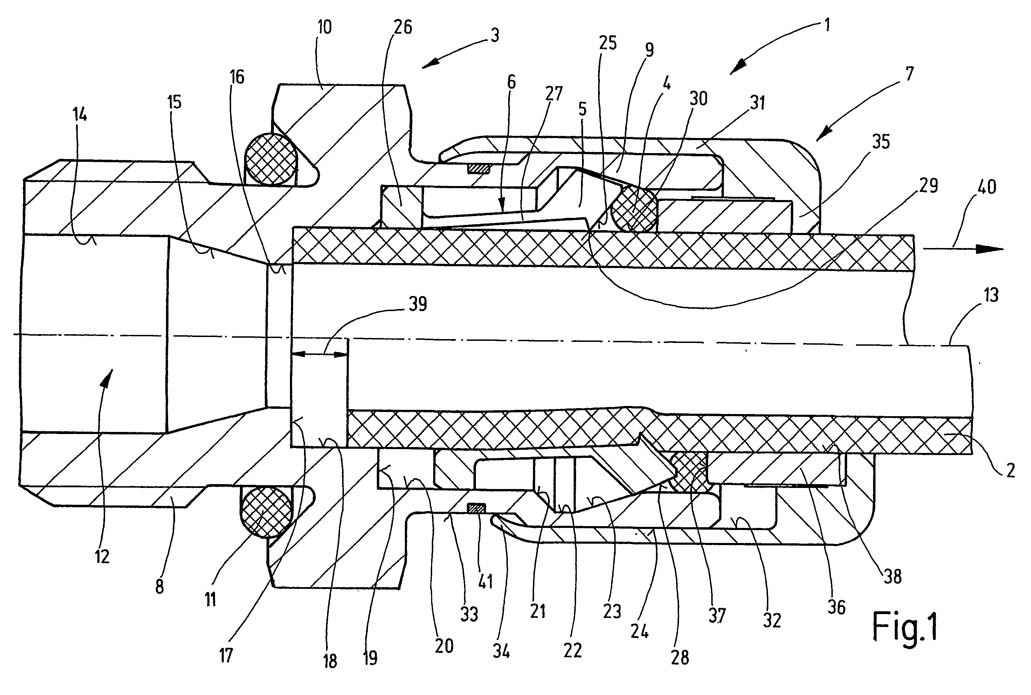

Die Fig. 1 zeigt eine erfindungsgemäße Vorrichtung zum Verbinden mit einem Ende einer röhrenartigen Leitung 2, insbesondere einen Schlauch-Schnellverbinder 1, im Längsschnitt. Dabei ist in der oberen Bildhälfte die Anordnung mit eingeführter, aber nicht geklemmter röhrenartiger Leitung 2 dargestellt. In der unteren Bildhälfte ist dagegen die Anordnung mit geklemmter röhrenartiger Leitung 2 dargestellt.

Der Schlauch-Schnellverbinder 1 weist ein Anschlussstück 3 auf, in das ein Ende der röhrenartigen Leitung 2 einführbar ist, sowie ein ringförmiges und im unbelasteten Querschnitt kreisförmiges Dichtelement 4 und ein mindestens eine Klemmbacke 5 aufweisendes Klemmelement 6. Weiterhin weist der Schlauch-Schnellverbinder 1 des dargestellten Ausführungsbeispieles an dem Ende, an dem die röhrenartige Leitung 2 in das Anschlussstück 3 einführbar ist, ein Löseelement 7 auf.

Das Anschlussstück 3 bildet an seinem von dem Löseelement 7 abgewandten Ende ein als Außengewinde 8 ausgeführtes Anschlussgewinde und an seinem dem Löseelement 7 zugewandten Ende ein Klemmteil 9 aus. Zwischen dem Außengewinde 8 und dem Klemmteil 9 befindet sich ein Flansch 10. Zwischen dem Flansch 10 und dem das Außengewinde 8 tragenden Endabschnitt des Anschlussstücks 3 ist beispielsweise beim Einbau des Schlauch-Schnellverbinders 1 in eine Schottwand ein Dichtring 11 einsetzbar, der ebenso wie das Dichtmittel 4 aus einem für den jeweiligen Anwendungsfall geeigneten Werkstoff bestehen kann, beispielsweise aus einem unter der Marke PERBUNAN im Handel erhältlichen Kautschuk, aus EPDM-(Ethylen-Propylen-Dien und Polymethylen) oder aus einem Fluorelastomer, wie es unter der Marke VITON im Handel erhältlich ist.

Das Anschlussstück 3 ist von einer Mittenbohrung 12 durchsetzt, die im Wesentlichen rotationssymmetrisch zu einer Längsachse 13 des Schlauch-Schnellverbinders 1 ist. Die Mittenbohrung 12 weist nach einem ersten zylindrischen Teil 14 einen sich kegelförmig verjüngenden Teil 15 auf. Daran schließt sich ein zweiter zylindrischer Teil 16 an, der unter Bildung eines im Wesentlichen rechtwinkligen Absatzes 17 in einem dritten zylindrischen Teil 18 übergeht. Einer radial nach außen sich erstreckenden Schulter 19 folgt ein verhältnismäßig langer vierter zylindrischer Teil 20. Einem kegelförmig sich nach außen erweiternden Teil 21 folgt ein kurzer fünfter zylindrischer Teil 22, an das sich eine in Richtung zum Löseelement 7 kegelförmig verengende Klemmfläche 23 anschließt. Im Bereich der auf dem Innenumfang vorgesehenen Klemmfläche 23, des fünften zylindrischen Teils 22 und des kegelförmigen Teils 21 befindet sich auf dem Außenumfang eine zylindrische Lagerfläche 24 für das Löseelement 7.

Das Klemmelement 6 weist ein ringförmiges Verbindungselement 26 auf, an dem im Wesentlichen parallel zur Längsachse 13 sich erstreckende und federspeichernd in Radialrichtung auslenkbare Klemmarme 27 angeordnet sind, die an ihrem vom ringförmigen Verbindungselement 26 wegweisenden Ende jeweils eine Klemmbacke 5 ausbilden.
Die Klemmbacken 5 haben auf ihrer Außenseite jeweils eine im Wesentlichen schräg zur Längsachse 13 und mit dieser vorzugsweise einen Winkel zwischen 10 und 30°, vorzugsweise etwa 20°, einschließende Klemmfläche 28, die mit der Klemmfläche 23 des Anschlussstücks 3 zusammenwirkt. Vorzugsweise ist der von der Klemmfläche 23 des Anschlussstücks 3 mit der Längsachse eingeschlossene Winkel etwas kleiner als der Winkel der Klemmfläche 28.

Auf ihrer zur röhrenartigen Leitung 2 gerichteten Seite weist jede Klemmbacke 5 eine dem klemmenden Eingriff in die röhrenartige Leitung 2 dienende, durch zwei einen spitzen Winkel einschließende Klemmflächen gebildete Klemmkante 29 aus. Diese Klemmkante 29 ist in Einführrichtung der röhrenartigen Leitung 2 hinter einem ringförmigen und im Querschnitt vorzugsweise kreisförmigen Dichtelement 4 angeordnet, so dass die Außenumfangsfläche 30 der röhrenartigen Leitung 2, die in dichtender Anlage an dem Dichtelement 4 ist, beim Einführen der röhrenartigen Leitung 2, kontaktfrei zu der Klemmbacke 5 und insbesondere zu der Klemmkante 29 bleibt.

Das Löseelement 7 weist ein Hülsenelement 31 auf, das auf seiner Innenfläche einen zylindrischen Abschnitt 32 bildet, der zusammen mit der vom Anschlussstück 3 ausgebildeten Lagerfläche 24 die Führung des manuell axial gegenüber dem Anschlussstück 3 beweglichen Löseelements 7 gewährleistet. Zwischen der Lagerfläche 24 und dem Flansch 10 weist das Anschlussstück 3 eine Nut 33 auf, in die ein umgebörteltes Ende 34 des Löseelements 7 eingreift und dadurch das Löseelement 7 unverlierbar an dem Anschlussstück 3 angeordnet ist.

Auf der vom Anschlussstück 3 abgewandten Seite bildet das Löseelement 7 einen sich radial nach innen erstreckenden Abschlussteil 35 aus, der eine Öffnung für den Durchtritt der röhrenartigen Leitung 2 aufweist, die nur geringfügig größer ist als die Außenumfangsfläche der röhrenartigen Leitung 2 oder sogar in Anlage an dieser ist. Axial in Richtung auf das Anschlussstück 3 schließt sich an den Abschlussteil 35 ein Ringelement 36 an, das im Wesentlichen hülsenförmig ausgebildet ist und dessen axiale Erstreckung etwa die vierfache Wandstärke der röhrenartigen Leitung 2 beträgt. Das Ringelement 36 ist mit dem Hülsenelement 31 lösbar oder unlösbar verbunden, beispielsweise verpresst, oder einstückig mit diesem ausgebildet.

An seinem dem Dichtelement 4 zugewandten Ende weist das Ringelement 36 eine im Ausführungsbeispiel kreisringförmige Fläche 37 auf, die mit der Längsachse 13 im Wesentlichen einen rechten Winkel einschließt. Das Ringelement 36 bildet auf seiner kreiszylindrischen Innenfläche 38 eine Führung für die in das Anschlussstück 3 einzuführende röhrenartige Leitung 2. Eine weitere Führung für die röhrenartige Leitung 2 ist durch den dritten zylindrischen Teil 18 des Anschlussstücks 3 gebildet, dessen axiale Erstreckung jedenfalls größer ist als der von der röhrenartigen Leitung 2 beim Klemmen zurückgelegte Weg 39.

In einer alternativen Ausführungsart der Erfindung wird diese weitere Führung für die röhrenartige Leitung 2 durch das ringförmige Verbindungselement 26 selbst gebildet, welches in diesem Fall eine gegenüber der in der Fig. 1 dargestellten Ausführungsart größere axiale Erstreckung aufweist. Vorzugsweise weist ein solches ringförmiges Verbindungselement eine geringere Dicke in radialer Richtung auf. Die Schulter 19 kann ebenso entfallen wie der dritte zylindrische Teil 18 und der vierte zylindrische Teil 20 geht unmittelbar in den rechtwinkligen Absatz 17 über, so dass die Baugröße der Vorrichtung in radialer Richtung weiter reduziert werden kann.

In der oberen Bildhälfte der Fig. 1 ist eine Ausgangsposition der Klemmbacke 5 dargestellt, in der die röhrenartige Leitung 2 nicht geklemmt ist. Dennoch ist die Klemmkante 29 in Anlage an der Außenumfangsfläche der röhrenartigen Leitung 2. Wirkt eine Kraft in Richtung des Pfeils 40 auf die röhrenartige Leitung 2, beispielsweise aufgrund eines entsprechenden Drucks in dem in der Leitung transportierten Medium, wird aufgrund des Reibschlusses zwischen der Klemmbacke 5 und der Leitung 2 das Klemmelement 6 ebenfalls in Richtung des Pfeils 40 verschoben. Durch Zusammenwirken der Klemmfläche 28 der Klemmbacke 5 und der Klemmfläche 23 des Anschlussstücks 3 kommt es zu einem Auslenken der. Klemmbacke 5 in Richtung auf die röhrenartige Leitung 2, wodurch der Reibschluss zwischen Klemmbacke 5 und röhrenartiger Leitung 2 weiter erhöht wird. Durch diesen selbstverstärkendeh Effekt wird die Axialbewegung der röhrenartigen Leitung 2 gegenüber dem Anschlussstück 3 nach einem von der Höhe der wirkenden Kraft abhängenden Weg 39 gestoppt. Dieser Zustand ist in der unteren Bildhälfte der Fig. 1 dargestellt. Dabei sind dann auch die Klemmarme 27 in Anlage an der Außenumfangsfläche der röhrenartigen Leitung 2. In einer bevorzugten Ausführungsart der Erfindung kommt es zu keiner Relativbewegung zwischen der röhrenartigen Leitung 2 und dem Klemmelement 6.

Zum Lösen des geklemmten Zustandes wird das Löseelement 7 entgegen der Richtung des Pfeils 40 geschoben und dadurch mittels des Ringelements 36 und des Dichtelements 4 die Klemmbacke 5 entlang der Klemmfläche 23 verschoben, mittels der Anlage des Dichtelements 4 an der Anlagefläche 25 gespreizt und dabei außer Eingriff mit der röhrenartigen Leitung 2 gebracht, bis die in der Fig. 1 in der oberen Bildhälfte dargestellte Ausgangsposition wieder erreicht ist, in der die röhrenartige Leitung 2 aus dem Schlauch-Schnellverbinder 1 entnommen werden kann.

Jedenfalls in mindestens einer der in der oberen und unteren Bildhälfte der Fig. 1 dargestellten axialen Endpositionen ist das Löseelement 7 mit dem Anschlussstück 3 lösbar verrastbar. Hierzu kann beispielsweise im Bereich der Lagerfläche 24 eine Kugel federkraftbelastet in dem Anschlussstück 3 radial bewegbar geführt sein, die in der axialen Endposition in eine (nicht dargestellte) Öffnung in dem Löseelement 7 eingreift. Sofern die Öffnung im Löseelement 7 durchgehend ist, kann der Eingriff der federbelasteten Kugel auch von außen tastbar sein, und dadurch die axiale Endposition des Löseelements 7 taktil signalisierbar sein. In einer weiterhin bevorzugten Ausführungsform der Erfindung kann mindestens eine axiale Endposition des Löseelements 7 visuell signalisierbar sein, beispielsweise die klemmende Endposition durch einen an einer entsprechenden Stelle der Nut 33 angebrachten Farbring 41 signalisierbar sein.

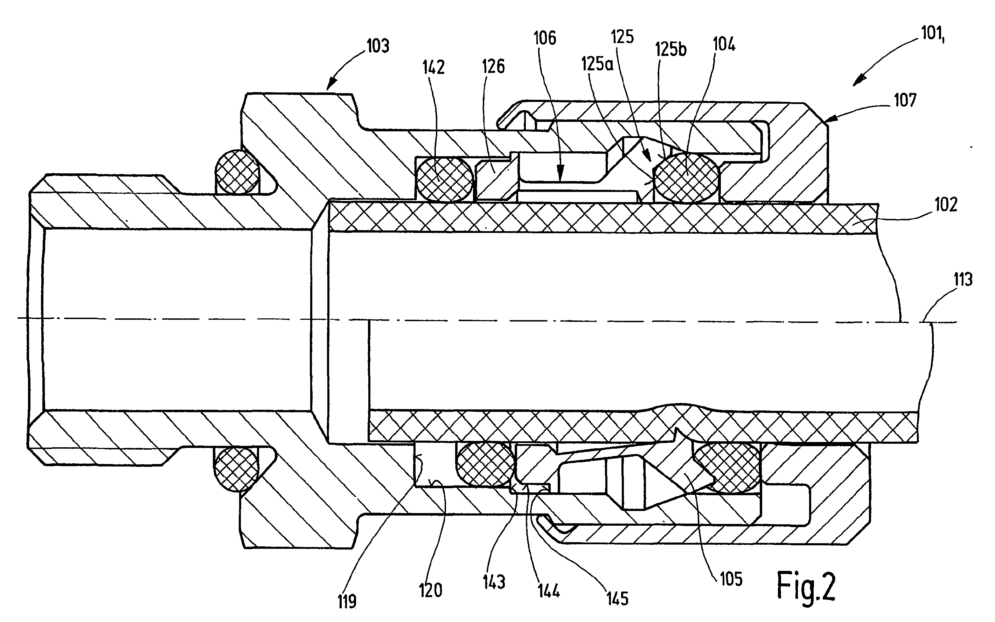

Die Fig. 2 zeigt ein zweites Ausführungsbeispiel der Erfindung.
Die Darstellung des Schlauch-Schnellverbinders 101 entspricht dabei im wesentlichen dem ersten Ausführungsbeispiel der Fig. 1. Demgegenüber unterschiedlich ist beispielsweise die Anordnung eines zweiten Dichtelements 142 im Bereich zwischen dem ringförmigen Verbindungselement 126 und der Schulter 119. Der Durchmesser des vorzugsweise kreisförmigen Querschnitts durch das zweite Dichtelement 142 ist dabei im unverformten Zustand größer als die entsprechende Abmessung des Ringspaltes zwischen der Außenumfangsfläche der röhrenartigen Leitung 102 und der lichten Weite des vierten zylindrischen Teils 120. Durch dieses zweite Dichtelement 142 ist ein Eindringen insbesondere auch von flüssigen Medien in den Bereich des Klemmelements 106 zuverlässig verhindert. Dadurch kann für das Klemmelement 106 ein Werkstoff eingesetzt werden, der einfacher und kostengünstiger bearbeitet, insbesondere spanend bearbeitet, werden kann. Außerdem wird ein "Verkleben" der Klemmbacken 105 durch das Medium verhindert.

Insbesondere um eine zu starke und damit nachteilige Verformung des zweiten Dichtelements 142 zu vermeiden weist der vierte zylindrische Teil 120 an seinem von der Schulter 119 abgewandten axialen Ende einen im dargestellten Ausführungsbeispiel nach außen gerichteten zweiten Absatz 143 auf, dessen kreisringförmige Fläche sich im wesentlichen radial zur Längsachse 113 erstreckt. Denkbar ist auch eine andere winkelmäßige Ausrichtung in Bezug auf die Längsachse 113, solange die Funktion eines Anschlages durch den zweiten Absatz 143 gewährleistet ist.

Das Gegenstück zu dem zweiten Absatz 143 ist die von dem ringförmigen Verbindungselement 126 vorzugsweise einstückig ausgebildete zweite Schulter 145, die im dargestellten Ausführungsbeispiel ebenfalls eine sich im wesentlichen radial zur Längsachse 113 erstreckende Kreisringfläche bildet. In Einführrichtung geht die zweite Schulter 145 in einen im dargestellten Ausführungsbeispiel zylindrischen Eingriffsabschnitt 144 über, der einen Durchmesser aufweist, der etwas kleiner ist als die lichte Weite des vierten zylindrischen Teils 120.

Durch das Zusammenwirken des zweiten Absatzes 143 und der zweiten Schulter 145 erfährt die axiale Bewegung des ringförmigen Verbindungselements 126 und damit des Klemmelements 106 beim Einführen der röhrenartigen Leitung 102 und/oder beim lösendem Betätigen des Löseelements 107 eine Begrenzung derart, dass zwischen dem stirnseitigen Ende des ringförmigen Verbindungselements 126 und der Schulter 119 ein ausreichender Abstand verbleibt, so dass das zweite Dichtelement 142 nicht nachteilig verformt wird.

Ein weiterer Unterschied des zweiten Ausführungsbeispieles besteht darin, dass die Anlagefläche 125 der Klemmbacke 105 zwei in radialer Richtung aneinander anschließende Abschnitte 125a und 125b aufweist. Der erste Abschnitt 125a verläuft dabei im nicht ausgelenkten Zustand der Klemmbacke 105 im wesentlichen radial zur Längsachse 113 oder schließt mit der Radialrichtung jedenfalls einen Winkel von weniger als 20° ein. Der zweite Abschnitt 125b schließt im nicht ausgelenkten Zustand der Klemmbacke 105 mit der Längsachse 113 einen spitzen Winkel zwischen vorzugsweise 20° und 70° ein, insbesondere etwa 45°. Die Anlagefläche 125 könnte auch entsprechend kreisförmig oder elliptisch gekrümmt sein. - Durch diese Ausgestaltung der Anlagefläche 125 ist die Betätigung bzw. Auslenkung der Klemmbacke 105 durch das Dichtelement 104, insbesondere beim lösenden Betätigen des Löseelements 107, und umgekehrt die Krafteinleitung von der Klemmbacke 105 auf das Dichtelement 104 weiter verbessert.

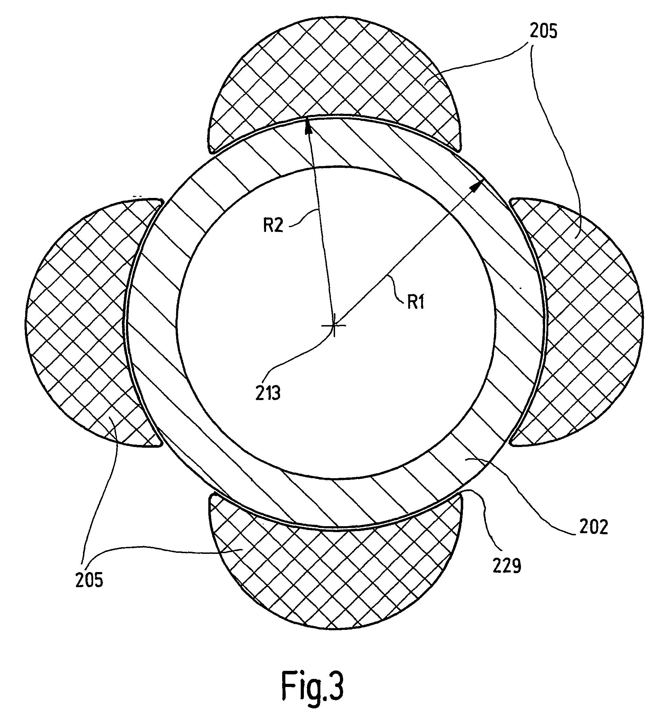

Die Fig. 3 zeigt eine bevorzugte Ausführung der Klemmbacken 205 im Querschnitt. Im dargestellten Ausführungsbeispiel sind vier Klemmbacken 205 in Umfangsrichtung gleich verteilt um die röhrenartige Leitung 202 herum angeordnet. Auf ihrer der röhrenartigen Leitung 202 zugewandten Fläche weisen die Klemmbacken 205 einen im Querschnitt im wesentlichen kreisförmigen Verlauf auf, wobei der zugehörige Radius R2 im wesentlichen mit.dem Radius R1 der röhrenartigen Leitung 202 übereinstimmt. Dadurch entstehen linienförmige oder sogar flächige Anlagestellen und insbesondere wird eine spitz-punktförmige Anlage der Klemmbacke 205 an der röhrenartigen Leitung 202 und die damit verbundene Gefahr der Beschädigung vermieden.

Die lichte Weite der von den Klemmbacken 205 begrenzten Fläche entspricht im unverspannten Zustand des Klemmelements 6, in dem die röhrenartige Leitung 202 eingeführt wird, im wesentlichen dem Durchmesser der röhrenartigen Leitung 202. Auch dadurch wird eine Beschädigung der Außenumfangsfläche der röhrenartigen Leitung 202 vermieden. Grundsätzlich könnte die lichte Weite auch größer als der Durchmesser der röhrenartigen Leitung 202 gewählt werden, allerdings ist dann der Kraftaufwand für den klemmenden Eingriff der Klemmbacken 205 erhöht.

Die Klemmbacken 205 können durch Schlitzen eines hülsenförmigen Elements hergestellt werden, beispielsweise durch Sägen, Trennschleifen, Räumen oder dergleichen. Insbesondere an den Schlitzrändern können Grate entstehen, die ebenfalls eine Beschädigung der röhrenartigen Leitung 202 verursachen können. Vorzugsweise ist das Klemmelement 6 daher entgratet, insbesondere im Bereich der Klemmbacken 205. Auch die Ecken oder Kanten 229 sind entgratet, so dass auch hier eine Beschädigung der röhrenartigen Leitung 202 ausgeschlossen ist.

Die Außenumfangsfläche der Klemmbacken 205 ist im dargestellten Ausführungsbeispiel im Querschnitt ebenfalls kreisförmig, kann aber auch anders ausgebildet sein, insbesondere so, wie in den Figuren 1 und 2 dargestellt. Es ist selbstverständlich, dass an Stelle der in der Fig. 3 gezeigten insgesamt vier Klemmbacken 205 jede weitere Zahl von Klemmbacken 205 realisierbar ist, je nach Anwendungsfall und Anforderungen. In den meisten Anwendungsfällen dürfte dabei eine Gleichverteilung der Klemmbacken 205 in Umfangsrichtung vorteilhaft sein.

## Patentansprüche

1. Vorrichtung zum lösbaren Verbinden mit einem Ende einer röhrenartigen Leitung (2), insbesondere Schlauch-Schnellverbinder (1), mit einem Anschlußstück (3), in das ein Ende der röhrenartigen Leitung (2) einführbar ist, einem Dichtelement (4) und einem Klemmelement (6) mit mindestens einer Klemmbacke (5), die radial auslenkbar ist, wobei in Einführrichtung der röhrenartigen Leitung (2) das Dichtelement (4) vor der Klemmbacke (5) angeordnet ist und das Dichtelement (4) in der eingeführten Position der röhrenartigen Leitung (2) in Anlage an einer Außenumfangsfläche (30) der röhrenartigen Leitung (2) ist, die beim Einführen der röhrenartigen Leitung (2) kontaktfrei zu der Klemmbacke (5) bleibt, wobei weiterhin die Vorrichtung ein Löseelement (7) aufweist, das axial gegenüber dem Anschlußstück (3) verschiebbar ist, und wobei das Dichtelement (4) zwischen dem Löseelement (7) und der Klemmbacke (5) angeordnet ist, **dadurch gekennzeichnet, dass** das Dichtelement (4) sowohl in Anlage an der Klemmbacke (5) als auch in Anlage an dem Löseelement (7) ist, dass die Klemmbacke (5) in einer Ausgangsposition in reibschlüssiger Anlage an der röhrenartigen Leitung (2) ist, und dass das Klemmelement (6) gegenüber dem Anschlußstück (3) axial verschiebbar ist und dabei eine von der Klemmbacke (5) ausgebildete Klemmfläche (28) mit einer von dem Anschlußstück (3) ausgebildeten Klemmfläche (23) derart zusammenwirkt, daß die Klemmbacke (5) in Richtung auf die röhrenartige Leitung (2) auslenkbar ist, und daß durch die Auslenkung der Klemmbacke (5) das Dichtelement (4) in dichtender Anlage an dem Anschlußstück (3) und an der röhrenartigen Leitung (2) gehalten ist.

2. Vorrichtung nach Anspruch 1, **dadurch gekennzeichnet, dass** die Klemmbacke (5) an ihrem dem Dichtelement (4) zugewandten Ende eine sich zum Dichtelement (4) hin radial aufweitende Anlagefläche (25) aufweist.

3. Vorrichtung nach Anspruch 1 oder 2, **dadurch gekennzeichnet, dass** das Löseelement (7) an seinem dem Dichtelement (4) zugewandten Ende eine Anlagefläche (37) aufweist, die mit der Längsachse (13) der Vorrichtung im wesentlichen einen rechten Winkel einschließt.

4. Vorrichtung nach einem der Ansprüche 1 bis 3, **dadurch gekennzeichnet, dass** das Löseelement (7) ein Ringelement (36) aufweist, das auf seiner der röhrenartigen Leitung (2) zugewandten Innenfläche (38) mindestens abschnittsweise zylindrisch ausgebildet ist und eine Führungsfläche für die röhrenartige Leitung (2) bildet.

5. Vorrichtung nach einem der Ansprüche 1 bis 4, **dadurch gekennzeichnet, dass** das Löseelement (7) ein unverlierbar an der Vorrichtung angeordnetes Hülsenelement (31) aufweist, mittels dem das Löseelement (7) gegenüber dem Anschlußstück (3) manuell verschiebbar ist.

6. Vorrichtung nach einem der Ansprüche 1 bis 5, **dadurch gekennzeichnet, dass** das Löseelement (7) einstückig ausgebildet ist.

7. Vorrichtung nach einem der Ansprüche 1 bis 6, **dadurch gekennzeichnet, dass** das Löseelement (7) an dem, dem Anschlußstück (3) gegenüberliegenden axialen Ende der Vorrichtung angeordnet ist.

8. Vorrichtung nach einem der Ansprüche 1 bis 7, **dadurch gekennzeichnet, dass** das Löseelement (7) in mindestens einer axialen Endposition mit dem Anschlußstück (3) lösbar verrastbar ist.

9. Vorrichtung nach einem der Ansprüche 1 bis 8, **dadurch gekennzeichnet, dass** mindestens eine axiale Endposition des Löseelements (7) visuell und/oder taktil signalisierbar ist.

10. Vorrichtung nach einem der Ansprüche 1 bis 9, **dadurch gekennzeichnet, dass** ein zweites Dichtelement (142) zwischen dem vom Löseelement (107) abgewandten axialen Ende des Klemmelements (106) und einer vom Anschlußstück (103) ausgebildeten Schulter (119) angeordnet ist, das in dichtender Anlage an der röhrenartigen Leitung (102) ist.

11. Vorrichtung nach Anspruch 10, **dadurch gekennzeichnet, dass** ein ringförmiges Verbindungselement (126) des Klemmelements (106) eine radial auskragende zweite Schulter (145) aufweist, die in eine Anlage mit einem zweiten Absatz (143) des Anschlußstücks (103) bringbar ist.

12. Vorrichtung nach einem der Ansprüche 1 bis 11, **dadurch gekennzeichnet, dass** die Klemmbacke (105) eine Anlagefläche (125) für die Anlage des Dichtelements (104) aufweist, und dass die Anlagefläche (125) mindestens einen Abschnitt (125b) aufweist, der mit einer Längsachse (113) der Vorrichtung einen Winkel von weniger als 90° einschließt, insbesondere weniger als 70°.

13. Vorrichtung nach einem der Ansprüche 1 bis 12, **dadurch gekennzeichnet, dass** die Klemmbacke (205) in einem Querschnitt zu einer Längsachse (213) der Vorrichtung einen mit dem zugehörigen Abschnitt der Außenumfangsfläche der röhrenartigen Leitung (202) im wesentlichen übereinstimmenden Verlauf aufweist.

## Claims

1. Means for disconnectable connecting with one end of a tubular line (2), especially a quick hose connector (1), with a connection piece (3), into which one end of the tubular line (2) can be inserted, a sealing element (4), and a clamp element (6) with at least one clamping pad (5) which can be displaced radially, whereby the sealing element (4) is located prior to the clamping pad (5) in insertion direction of the tubular line (2), and whereby the sealing element (4) abuts against an outer circumference surface (30) of the tubular line (2) in the inserted position of the tubular line (2), the same remaining contact-free in relation to the clamping pad (5) during the insertion of the tubular line (2), whereby the means further incorporates a disconnecting element (7) which is axially displaceable in relation to the connection piece (3), and whereby the sealing element (4) is positioned between the disconnecting element (7) and the clamping pad (5), **characterised in that** the sealing element (4) abuts against the clamping pad (5) as well as against the disconnecting element (7), and **in that** the clamping pad (5) abuts against the tubular line (2) in a friction positive manner in the starting position, and **in that** the clamping element (6) is axially displaceable in relation to the connection piece (3), whereby a clamping surface (28) formed by the clamping pad (5) co-operates with a clamping surface (23) formed by the connection piece (3) in such a way that the clamping pad (5) can be displaced in the direction of the tubular line (2), and that the displacement of the clamping pad (5) holds the sealing element (4) in sealing abutment against the connection piece (3) and against the tubular line (2).

2. Means according to Claim 1, **characterised in that** the clamping pad (5) incorporates an abutment surface (25) radially extending towards the sealing element (4) at its end that faces the sealing element (4).

3. Means according to Claim 1 or 2, **characterised in that** the disconnecting element (7) incorporates an abutment surface (37) at its end that faces towards the sealing element (4), the same enclosing a substantially right angle together with the longitudinal axis (13) of the means.

4. Means according to one of the Claims 1 to 3, **characterised in that** the disconnecting element (7) incorporates a ring element (36) that is formed cylindrical at least in parts on the inner surface (38) that faces the tubular line (2), and that forms a guide surface for the tubular line (2).

5. Means according to one of the Claims 1 to 4, **characterised in that** the disconnecting element (7) incorporates a sleeve element (31) that cannot be lost directly on the means, with which the disconnecting element (7) can be manually displaced in relation to the connection piece (3).

6. Means according to one of the Claims 1 to 5, **characterised in that** the disconnecting element (7) is formed from one piece.

7. Means according to one of the Claims 1 to 6, **characterised in that** the disconnecting element (7) is located at the axial end of the means opposite the connection piece (3).

8. Means according to one of the Claims 1 to 7, **characterised in that** the disconnecting element (7) can be disconnectably arrested with the connection piece (3) in at least one axial end position.

9. Means according to one of the Claims 1 to 8, **characterised in that** at least one axial end position of the disconnecting element (7) can be signalled either visually and/or tactile.

10. Means according to one of the Claims 1 to 9, **characterised in that** a second sealing element (142) is positioned between the axial end of the clamping element (106) that faces away from the disconnecting element (107) and a shoulder (119) formed by the connection piece (103) abutting sealingly against the tubular line (102).

11. Means according to Claim 10, **characterised in that** an annular connecting element (126) of the clamping element (106) incorporates a radially projecting second shoulder (145) which can be abutted against a second abutment means (143) of the connection piece (103).

12. Means according to one of the Claims 1 to 11, **characterised in that** the clamping pad (105) incorporates an abutment surface (125) for the abutment of the sealing element (104), and **in that** the abutment surface (125) incorporates at least one section (126b) which encloses an angle of less than 90° together with a longitudinal axis (113) of the means, and preferably of less than 70°.

13. Means according to one of the Claims 1 to 12, **characterised in that** the clamping pad (205) extends substantially along the associated section of the outer circumference surface of the tubular line (202) within a cross-section positioned in relation to a longitudinal axis (213) of the means.

## Revendications

1. Dispositif pour une connexion amovible à une extrémité d'un fil tubulaire (2), en particulier dispositif de jonction rapide de tuyaux (1), avec un manchon fileté mâle (3), dans lequel une extrémité du fil tubulaire (2) peut être insérée, avec un élément étanche (4) et avec un élément adhésif (6) comprenant au moins une mâchoire de serrage (5) pouvant être déviée de manière radiale, sachant que, dans le sens de l'insertion du fil tubulaire (2), l'élément étanche (4) est placé avant la mâchoire de serrage (5) et l'élément étanche (4) se trouve, lorsque le fil tubulaire (2) est en position insérée dans l'installation, sur une surface périphérique externe (30) du fil tubulaire (2) qui n'est jamais en contact avec la mâchoire de serrage (5) lors de l'insertion du fil tubulaire (2), sachant que, à son tour, le dispositif présente un élément de déclenchement (7) pouvant se déplacer de manière axiale par rapport au manchon fileté mâle (3) et sachant que l'élément étanche (4) est situé entre l'élément de déclenchement (7) et la mâchoire de serrage (5), **caractérisé en ce que** l'élément étanche (4) se trouve, dans l'installation, aussi bien sur la mâchoire de serrage (5) que sur l'élément de déclenchement (7), **en ce que** la mâchoire de serrage (5) se trouve sur le fil tubulaire (2) en position de départ dans l'installation de friction et **en ce que** l'élément adhésif (6) peut être déplacé de manière axiale par rapport au manchon fileté mâle (3) et ainsi qu'une surface adhésive (28) composée de la mâchoire de serrage (5) interagit avec une surface adhésive (23) composée du manchon fileté mâle (3) de telle sorte que la mâchoire de serrage (5) peut être déviée dans la direction du fil tubulaire (2) et que, grâce à la déviation de la mâchoire de serrage (5), l'élément étanche (4) est conservé, dans l'installation étanche, sur le manchon fileté mâle (3) et sur le fil tubulaire (2).

2. Dispositif selon la revendication 1, **caractérisé en ce que** la mâchoire de serrage (5) présente en son extrémité en contact avec l'élément étanche (4) une face de départ (25) s'étendant de manière radiale vers l'élément étanche (4).

3. Dispositif selon la revendication 1 ou 2, **caractérisé en ce que** l'élément de déclenchement (7) présente en son extrémité en contact avec l'élément étanche (4) une face de départ (37) formant un angle essentiellement droit avec l'axe longitudinal (13) du dispositif.

4. Dispositif selon l'une quelconque des revendications 1 à 3, **caractérisé en ce que** l'élément de déclenchement (7) est composé d'un élément annulaire (36) présentant, sur sa face interne (38) en contact avec le fil tubulaire (2), une forme cylindrique au moins par segments et **en ce que** l'élément de déclenchement (7) constitue une surface de guidage pour le fil tubulaire (2).

5. Dispositif selon l'une quelconque des revendications 1 à 4, **caractérisé en ce que** l'élément de déclenchement (7) présente un élément gainant (31) placé de manière solide sur le dispositif et grâce auquel l'élément de déclenchement (7) peut être déplacé manuellement par rapport au manchon fileté mâle (3).

6. Dispositif selon l'une quelconque des revendications 1 à 5, **caractérisé en ce que** l'élément de déclenchement (7) est en un seul tenant.

7. Dispositif selon l'une quelconque des revendications 1 à 6, **caractérisé en ce que** l'élément de déclenchement (7) est placé sur l'extrémité axiale du dispositif opposée au manchon fileté mâle (3).

8. Dispositif selon l'une quelconque des revendications 1 à 7, **caractérisé en ce que** l'élément de déclenchement (7) peut être enclenché de manière indépendante avec le manchon fileté mâle (3) dans au moins une position finale axiale.

9. Dispositif selon l'une quelconque des revendications 1 à 8, **caractérisé en ce qu'**au moins une position finale axiale de l'élément de déclenchement (7) peut être signalisée de manière visuelle et/ou tactile.

10. Dispositif selon l'une quelconque des revendications 1 à 9, **caractérisé en ce qu'**un deuxième élément étanche (142) est placé entre l'extrémité axiale de l'élément adhésif (106) opposée à l'élément de déclenchement (107) et une épaule (119) composée d'un manchon fileté mâle (103) et **en ce que** cet élément étanche est situé sur le fil tubulaire (102) dans une installation étanche.

11. Dispositif selon la revendication 10, **caractérisé en ce qu'**un élément de liaison (126) annulaire de l'élément adhésif (106) présente une deuxième épaule (145) faisant saillie de manière radiale et qui peut être insérée dans une installation avec un deuxième palier (143) du manchon fileté mâle (103).

12. Dispositif selon l'une quelconque des revendications 1 à 11, **caractérisé en ce que** la mâchoire de serrage (105) présente une face de départ (125) pour l'installation de l'élément étanche (104) et **en ce que** la face de départ (125) présente au moins un segment (125b) formant un angle de moins de 90°, en particulier de moins de 70°, avec un axe longitudinal (113) du dispositif.

13. Dispositif selon l'une quelconque des revendications 1 à 12, **caractérisé en ce que** la mâchoire de serrage (205) présente, dans une coupe transversale d'un axe longitudinal (213) du dispositif, un tracé coincidant pour l'essentiel au segment correspondant de la surface périphérique extérieure du fil tubulaire (202).
